# EUROPÄISCHE PATENTANMELDUNG

(11) **EP 3 101 566 A1**
(43) Veröffentlichungstag der Anmeldung: **07.12.2016**
(21) Anmeldenummer: 15171939.0
(22) Anmeldetag: 12.06.2015
(51) Int. Cl.: G06F 17/50, G05B 19/418

(54) **VERFAHREN UND VORRICHTUNG ZUM ÜBERPRÜFEN DER BAUBARKEIT EINES VIRTUELLEN PROTOTYPS**

(30) Priorität: 05.06.2015 EP 15170831
(71) Anmelder: Invenio Virtual Technologies GmbH, 85748 Garching bei München (DE)
(72) Erfinder: Beck, Tobias, 80639 München (DE); Gaigl, Hermann, 85669 Pastetten (DE); Pretschuh, Michael, 81675 München (DE)
(74) Vertreter: Banzer, Hans-Jörg

(57) **Zusammenfassung**

Ein Verfahren zum Überprüfen der Baubarkeit eines virtuellen Prototyps umfasst ein automatisches Ermitteln von möglichen Problemstellen, welche beim Zusammenfügen des virtuellen Prototyps aus virtuellen Bauteilen auftreten können und vorgegebenen konstruktiven, physikalischen und/oder ästhetischen Anforderungen nicht genügen. Das Verfahren umfasst ein durch ein Rechnersystem assistiertes Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle. Ferner wird eine Vorrichtung zum Überprüfen der Baubarkeit eines virtuellen Prototyps vorgeschlagen. Mit Verfahren und Vorrichtungen nach Ausführungsbeispielen sind durch ein automatisches Bewerten von Problemstellen und durch ein effizienteres Bewerten von Problemstellen der Arbeits- und Zeitaufwand sowie Fehlbewertungen reduzierbar.

## Beschreibung

### GEBIET DER ERFINDUNG

Die Erfindung betrifft Verfahren und Vorrichtungen zum Überprüfen der Baubarkeit eines virtuellen Prototyps in der Produktentwicklung, beispielsweise in der Kraftfahrzeug-, Luftfahrt-, Raumfahrt-, Schiffbau-, allgemeinen Maschinenbau- und/oder Konsumgüterindustrie.

### HINTERGRUND

Technische Produkte werden immer komplexer und bestehen heute aus einer Vielzahl von einzelnen Bauteilen, die miteinander interagieren. Vor Entstehung der ersten Hardware-Prototypen existiert bereits eine präzise digitale Beschreibung des Produktes im Rechner. Dieser virtuelle Prototyp wird im Lauf des Entwicklungsprozesses ständig aktualisiert und auf z.B. geometrische oder technisch-physikalische Baubarkeit überprüft. Dieser kontinuierliche Prüfungsprozess des virtuellen Prototypen ist heute im Wesentlichen ein kontinuierlich und zyklisch durchgeführter dreistufiger Prozess:
Stufe 1: Rechnergestütztes Ermitteln einer vollständigen Liste von möglichen Problemstellen. Dabei ist Vollständigkeit so zu verstehen, dass alle "kritischen" Problemfälle in der Liste enthalten sein sollen (vgl. Stufe 2). Diese können etwa sein:
   - Orte, an welchen Kollisionen und Abstandsunterschreitungen von virtuellen Bauteilen bei statischer (Ruhezustand) bzw. dynamischer Betrachtung (z.B. Montage oder Betrieb des Produktes) auftreten.
   - Orte, an welchen Kombinationen und räumliche Nachbarschaften von Bauteilen und Materialien auftreten, welche die audio-visuelle Ästhetik des Endanwenders z.B. durch Knarzen oder Klappern beeinträchtigen oder die Verwendbarkeit (engl. "usability") stören.
   - Orte, an welchen eine simulativ ermittelbare Gefährdung der Produktfunktion vorliegt (z.B. übermäßige Hitzeentwicklung bei gleichzeitiger Unterschreitung von Mindestabstandsvorgaben, oder unzureichende Festigkeit von Bauteilen).
Stufe 2: Bewerten der auf der zuvor ermittelten Liste erfassten möglichen Problemstellen als "kritische" oder "unkritische" Problemstellen. Nur bei den "kritischen" Problemstellen besteht ein Handlungsbedarf. Ein Rechner ist heute nicht in der Lage, eine selbständige Bewertung der möglichen Problemstellen vorzunehmen, daher erfolgt eine Einzelbewertung der möglichen Problemstellen durch menschliche Experten. Die Liste der möglichen Problemstellen ist dabei ohne weiteres Zutun willkürlich sortiert.
Stufe 3: Dokumentieren der möglichen Problemstellen und Verfolgen ihrer weiteren Entwicklung bzw. Lösung im Lauf des Produktlebenszyklus (engl. "issue management"), wobei insbesondere virtuelle Bauteilpaarungen zusammen mit ihrer relativen Lage als mögliche Problemstellen verfolgt werden. Einmal als "unkritisch" bewertete Problemstellen werden dabei dem Experten im nächsten Schritt nicht mehr vorgelegt. Allerdings führen Änderungen an den verfolgten virtuellen Bauteilen des virtuellen Produktes und/oder an deren Lage zueinander zur Wiedervorlage als eine mögliche Problemstelle (siehe Stufe 2).

Insbesondere die Bewertung in Stufe zwei des oben beschriebenen Prozesses weist heute folgende Schwachstellen auf:
- Selbst "einfach zu entscheidende" mögliche Problemstellen werden einem menschlichen Bewerter vorgelegt.
- Ähnlichkeit oder Identität unter möglichen Problemstellen wird nicht für Bewertungszwecke genutzt.
- Mögliche Problemstellen können in neuen Entwicklungsprojekten (Erstbewertung) zu Hunderttausenden oder Millionen anfallen. Ein Experte bewertet jedoch maximal wenige hundert Problemstellen pro Tag zuverlässig. Dieses Missverhältnis der Größenordnungen kann die Machbarkeit der Erstbewertung in Frage stellen. In jedem Fall entstehen erhebliche Personalkosten.
- Menschliche Experten neigen bei nachlassender Konzentration zu Fehlbewertungen. Begünstigt wird dies durch Faktoren wie eine routinemäßige Durchführung einer großen Anzahl von Bewertungen oder die ungeordnete Vorlage verschiedener möglicher Problemstellen. Fehlbewertungen in einer so frühen Entwicklungsphase können in einer späteren Produktphase zu hohen Folgekosten führen.
- Herkömmliche Softwaretools, die ein Experte zur Bewertung nutzt, sind nicht auf die Aufgabe der Bewertung zugeschnitten und erfordern aufgrund Ihrer Komplexität und unabhängig von der fachlichen Qualifikation des Experten eine intensive Einarbeitung und Schulung. Die routinemäßige Durchführung einer Abfolge von immer gleichen Schritten bei der Bedienung dieser Tools ist zeitintensiv und ermüdend.

In der EP 1 111 487 A1 wird zum Überprüfen der Baubarkeit eines aus mehreren Bauteilen bestehenden Produkts, welches z.B. in der Kraftfahrzeug-, Luft-, Raumfahrt-, Schiffbau- und/oder Konsumgüterindustrie eingesetzt wird, vorgeschlagen, rechnergestützt, d.h. automatisch, digitale Baugruppendaten, welche räumliche Geometrieinformationen über eine bereits vorhandene Baugruppe enthalten, digitale Bauteiledaten, welche räumliche Geometrieinformationen über ein an der Baugruppe zu montierendes Bauteil enthalten, und digitale Positionsdaten, welche eine Positionssequenz mit mindestens zwei räumlichen Positionen beschreiben, wobei eine erste Position dem montierten Zustand des Bauteils und eine zweite Position dem demontierten Zustand des Bauteils entspricht, auszuwerten, um automatisch einen geeigneten Pfad für die Montage und/oder Demontage des Bauteils zu ermitteln, welcher eine kollisionsfreie Bewegung des Bauteils von der ersten Position in die zweite Position und/oder umgekehrt ermöglicht.

Die EP 1 067 479 A1 offenbart eine automatische Verifizierung der an unterschiedlichen Arbeitsplätzen konstruierten mehreren Bauteile eines Produkts, beispielsweise eines Kraftfahrzeugs, bei der Erstellung einer digitalen Abbildung des Produkts während dessen Konstruktionsphase. Zu diesem Zweck werden die bei der rechnergestützten Konstruktion der einzelnen Bauteile erzeugten digitalen Bilddaten in regelmäßigen Abständen über ein Datenübertragungsnetz automatisch eingelesen und zu einer digitalen Abbildung des gewünschten Produkts zusammengesetzt. Anschließend wird automatisch die Passform der einzelnen Bauteile in Bezug auf die somit erzeugte digitale Abbildung des Produkts verifiziert. Die Verifizierung wird vorzugsweise ebenfalls automatisch in regelmäßigen Abständen durchgeführt und kann sowohl zentral als auch dezentral erfolgen.

### ZUSAMMENFASSUNG DER ERFINDUNG

Es besteht ein Bedarf an Verfahren und Vorrichtungen, welche das Überprüfen der Baubarkeit eines virtuellen Prototyps effizienter, schneller und fehlerfreier gestalten.

Diese Aufgabe wird erfindungsgemäß durch ein Verfahren mit den Merkmalen des Anspruchs 1, einen Datenträger mit den Merkmalen des Anspruchs 16 und eine Vorrichtung mit den Merkmalen des Anspruchs 17 gelöst. Die abhängigen Ansprüche definieren bevorzugte und/oder vorteilhafte Ausführungsformen der Erfindung.

Nach Ausführungsbeispielen werden Verfahren und Vorrichtungen zum Überprüfen der Baubarkeit eines virtuellen Prototyps angegeben, welche insbesondere das Bewerten der möglichen Problemstellen, welche beim Zusammenfügen des virtuellen Prototyps aus virtuellen Bauteilen auftreten können, effizienter, schneller und fehlerfreier gestalten.

Mit derartigen Verfahren und Vorrichtungen können die Anzahl der durch menschliche Experten vorzunehmenden Bewertungen, der Arbeits- und Zeitaufwand sowie die Fehlbewertungsquote reduziert werden.

Ein Verfahren zum Überprüfen der Baubarkeit eines virtuellen Prototyps nach einem Ausführungsbeispiel umfasst ein automatisches Ermitteln von möglichen Problemstellen, welche beim Zusammenfügen des virtuellen Prototyps aus virtuellen Bauteilen auftreten können und vorgegebenen konstruktiven, physikalischen und/oder ästhetischen Anforderungen nicht genügen. Das Verfahren umfasst ein durch ein Rechnersystem assistiertes Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle.

Die virtuellen Bauteile eines virtuellen Prototyps liegen als digitale Beschreibung, insbesondere in Form von CAD-Daten, verallgemeinerten Voxel-Daten oder Triangulierungen vor. Daten verschiedenen Datenformats können hierbei zunächst in ein einheitliches Format gebracht werden. Vorzugsweise werden dann zum Überprüfen der Baubarkeit des virtuellen Prototyps seine virtuellen Bauteile planungsgemäß zueinander platziert, bevor die vorgegebenen Anforderungen geprüft und demzufolge die möglichen Problemstellen identifiziert werden. Die möglichen Problemstellen weisen eine Menge von konstruktiven, physikalischen und/oder ästhetischen Merkmalen auf, welche sich insbesondere aus den Merkmalen und Eigenschaften der beteiligten virtuellen Bauteile speist und/oder davon abgeleitet ist.

Beispiele für konstruktive Merkmale sind Form und Abmessungen einzelner Bauteile. Physikalische Merkmale können etwa Temperaturwerte sein, welche einer zuvor durchgeführten thermodynamischen Simulation entnommen sind. Ästhetische Merkmale können z.B. Angaben zur Geräuschentwicklung bei der Kombination bestimmter Materialien sein.

Die mehreren Merkmale der möglichen Problemstelle können zum Bewerten derselben als kritische oder unkritische Problemstellen herangezogen werden.

Die mehreren Merkmale können ein Schnittvolumen der jeweiligen möglichen Problemstelle, mit dem sich einige der virtuellen Bauteile in dem virtuellen Prototyp überschneiden, umfassen.

Ein Schnittvolumen wird vorzugsweise dadurch ermittelt, dass die Geometrien der an einer möglichen Problemstelle beteiligten virtuellen Bauteile bezüglich ihrer äußersten Hülle als Festkörper interpretiert und mengentheoretisch geschnitten werden. Ferner lassen sich aus dem Schnittvolumen abgeleitete geometrische Merkmale ermitteln. Zudem können auch den einzelnen beteiligten virtuellen Bauteilen manche dieser vorgenannten geometrischen Merkmale oder auch Merkmale aus deren MetaDaten entnommen werden (z.B. Material, Verwendungshinweise, räumliche Position innerhalb der Produktstruktur, Schlüsselwörter wie etwa "Schraube").

Vorteilhaft können Schnittvolumina und daraus abgeleitete Merkmale das Bewerten der zugrunde liegenden möglichen Problemstellen dadurch verbessern, dass sie diese besser beschreibbar bzw. unterscheidbar machen.

Das assistierte Bewerten kann ein gemeinsames Bewerten von möglichen Problemstellen umfassen, welche gleiche mehrere Merkmale aufweisen.

Vorteilhaft lassen sich solche möglichen Problemstellen, deren Bewertung aufgrund von Merkmalsidentität zu einem immer gleichen Bewertungsergebnis führen würde, zusammenfassen und einheitlich bewerten. Dies führt zu einem effizienteren Überprüfen der Baubarkeit des virtuellen Prototyps. Beispielsweise ist Merkmalsidentität bei numerischer geometrischer Gleichheit gegeben.

Das assistierte Bewerten kann ein Klassifizieren der jeweiligen möglichen Problemstelle anhand der mehreren Merkmale der möglichen Problemstelle in eine von mehreren Problemklassen umfassen.

Die mehreren Merkmale einer möglichen Problemstelle sind als Merkmalsvektor interpretierbar. Bei Wahl einer geeigneten Metrik lassen sich die möglichen Problemstellen so in einen mehrdimensionalen metrischen Merkmalsraum abbilden.

Falls geeignete (Unterscheidungs-)Merkmale vorliegen, bilden mögliche Problemstellen mit ähnlichen Merkmalswerten darin in der Regel unterscheidbare Ballungen (Cluster).

Zwischen den jeweiligen Merkmalsvektoren von je zwei möglichen Problemstellen kann mathematisch eine Differenz, d.h. eine Entfernung oder ein Abstand in diesem mehrdimensionalen Raum, angegeben werden. Dies geschieht durch Wahl einer geeigneten Metrik, so dass ein geringer Abstand auf Ähnlichkeit möglicher Problemstellen hinweist. Das entspricht insbesondere einer Gewichtung der Merkmale einer jeweiligen möglichen Problemstelle, so wie diese auch von einem menschlichen Experten vorgenommen werden würde, um mögliche Problemstellen als ähnlich zu identifizieren.

Bevorzugt sind bestimmte Abschnitte des mehrdimensionalen Raums jeweils einer Problemklasse zuordenbar, in welche solche möglichen Problemstellen fallen, welche zueinander ähnlich sind. Ähnlichkeit basiert in diesem Zusammenhang vorzugsweise auf ähnlichen Merkmalswerten bestimmter der mehreren Merkmale der zugrunde liegenden möglichen Problemstellen, oder auf einer Entfernung zwischen ihren Merkmalsvektoren. Dementsprechend definieren sich Problemklassen nicht notwendigerweise über sämtliche der mehreren Merkmale der möglichen Problemstellen.

Idealerweise fallen unter die Problemklassen bei geeigneter Definition derselben lediglich solche möglichen Problemstellen, welche einheitlich zu bewerten sind. Sofern auch nur für eine einzige mögliche Problemstelle eine Bewertung durchgeführt wurde, steht in der Folge die Bewertung aller anderen möglichen Problemstellen dieser Problemklasse fest. Dies führt zu einem effizienteren Überprüfen der Baubarkeit des virtuellen Prototyps.

Zumindest eine der mehreren Problemklassen kann für den Verfahrensablauf vorgegeben sein.

Vorteilhaft lassen sich so beispielsweise Problemklassen mit bekannten Bewertungen aus bereits bewältigten Entwicklungsprojekten übernehmen. Dies führt zu einem effizienteren Überprüfen der Baubarkeit des virtuellen Prototyps, weil sich bekannte Bewertungen in das aktuelle Entwicklungsprojekt übernehmen lassen.

Das Klassifizieren der jeweiligen möglichen Problemstelle in die vorgegebene Problemklasse kann ein vollautomatisches Klassifizieren anhand einer heuristischen Bewertungsfunktion umfassen, welche für die vorgegebene Problemklasse spezifisch ist.

Vorteilhaft für den Bewertungsdurchsatz insbesondere bei Erstbewertungen in einem Entwicklungsprojekt ist, wenn in bestimmte Problemklassen fallende mögliche Problemstellen, welche einer vollautomatischen Bewertung zugänglich sind, dem menschlichen Experten letztlich nicht mehr zur Bewertung vorzulegen sind, weil sie einer vorgegebenen Problemklasse mit bekannter Bewertung zuzuordnen sind.

Eine heuristische Bewertungsfunktion ist vorliegend eine Bewertungsfunktion, welche auf Erfahrung basiert und ein Zuversichtsmaß für die richtige Klassifikation liefert.

Zumindest eine der mehreren Problemklassen kann während des Verfahrensablaufs vollautomatisch ermittelt werden.

Ein vollautomatisches Ermitteln von Problemklassen kann von dem Rechnersystem anhand von unüberwachtem ("unsupervised") maschinellen Lernen selbständig durchgeführt werden. Hierbei wird die Menge aller möglichen Problemstellen automatisch geclustert, d.h. Problemklasse ergeben sich aufgrund der gegenseitigen Lage der in dem metrischen Merkmalsraum abgebildeten Merkmalsvektoren der möglichen Problemstellen.

Vorteilhaft wird hierdurch insbesondere eine Erstbewertung in einem Entwicklungsprojekt beschleunigt, für welches zunächst keine geeignete Problemklassifizierung gegeben ist, die besagt, welche der mehreren Merkmale und welche Wertebereiche dieser Merkmale sich am besten zur Bildung einheitlich zu bewertender Problemklassen eignen.

Das assistierte Bewerten kann ein vollautomatisches Verknüpfen der jeweiligen möglichen Problemstelle anhand eines Verweises auf eine bereits bewertete Problemstelle umfassen, welche die gleichen mehreren Merkmale und/oder die gleiche Problemklasse aufweist.

Vorteilhaft kann durch ein Verweisen auf ähnliche Problemstellen (d.h. Problemklassen) oder identische Problemstellen aus vorausgegangenen Bewertungen diesen ein Bewertungshinweis oder eine fertige Bewertung entnommen werden.

Die vorausgegangene Bewertung kann beispielsweise im gleichen oder einem früheren Entwicklungsprojekt getätigt worden sein.

Das assistierte Bewerten kann ein Bereitstellen weiterer konstruktiver, physikalischer und/oder ästhetischer Informationen umfassen, welche für die Problemklasse der jeweiligen möglichen Problemstelle spezifisch und von den mehreren Merkmalen der möglichen Problemstelle abgeleitet sind.

Die Anreicherung durch zusätzliche Informationen kann dem menschlichen Experten darin unterstützen, in kurzer Zeit sämtliche Aspekte der zur Bewertung vorgelegten möglichen Problemstelle zu erfassen.

Vorteilhaft lässt sich zudem die Menge der für das Überprüfen der Baubarkeit des virtuellen Prototyps in einem Speicher vorzuhaltenden Daten minimieren und diese erst im Bedarfsfall durch Details anreichern, wenn sich der menschliche Experte der konkret zu bewertenden möglichen Problemstelle zuwendet.

Die weiteren Informationen können mindestens eine räumliche Ansicht und/oder mindestens eine Schnittebene der jeweiligen möglichen Problemstelle umfassen.

Auch die Anreicherung durch zusätzliche räumliche Ansichten und/oder Schnittebenen kann den menschlichen Experten darin unterstützen, in kurzer Zeit sämtliche Aspekte der zur Bewertung vorgelegten möglichen Problemstelle zu erfassen. Aussagekräftige räumliche Ansichten von Schnittvolumen und/oder Schnittebenen sind dabei insbesondere aus den Hauptachsen des Schnittvolumens und/oder der beteiligten virtuellen Bauteile bestimmbar.

Das assistierte Bewerten kann ein Sortieren der möglichen Problemstellen in eine Bewertungsreihenfolge anhand der Problemklasse der jeweiligen möglichen Problemstelle umfassen.

Vorteilhaft für die Fehlbewertungsquote und den Bewertungsdurchsatz des menschlichen Bewerters ist, wenn zueinander ähnliche mögliche Problemstellen aufeinanderfolgend zur Bewertung vorgelegt werden, so dass sich der Kontext der zur Bewertung vorgelegten möglichen Problemstellen nicht ständig ändert.

Die Problemklasse ist als Kriterium für eine Sortierung der möglichen Problemstellen nutzbar, da unter diese per Definition zueinander ähnliche mögliche Problemstellen fallen.

Zusätzlich ist auch innerhalb von Problemklassen eine Sortierung vornehmbar, beispielsweise anhand der Werte zumindest eines Merkmals der jeweiligen möglichen Problemstelle.

Das assistierte Bewerten kann ferner ein Sortieren der möglichen Problemstellen in eine Bewertungsreihenfolge anhand einer von mehreren Prioritätsstufen umfassen, welche für die Problemklasse der jeweiligen möglichen Problemstelle spezifisch ist, wobei jede der mehreren Prioritätsstufen einer unterschiedlich kritischen Problemstelle entspricht.

Vorteilhaft für die frühzeitige Elimination besonders kritischer möglicher Problemstellen im Entwicklungsprozess ist, wenn diese vorrangig zur Bewertung vorgelegt werden. Mithin können dadurch auch weniger kritische mögliche Problemstellen hinfällig werden.

Die mehreren Prioritätsstufen werden bevorzugt im Rahmen eines Rückgriffs auf bereits bewältigte Entwicklungsprojekte abgeleitet. Alternativ ist auch eine feste Vorgabe möglich.

Das assistierte Bewerten kann ein Zuordnen der möglichen Problemstellen zu verfügbaren Bewertungszeiträumen anhand einer von mehreren Komplexitätsstufen umfassen, welche für die Problemklasse der jeweiligen möglichen Problemstelle spezifisch ist, wobei jede der mehreren Komplexitätsstufen einem unterschiedlichen Komplexitätsgrad beim Bewerten der jeweiligen möglichen Problemstelle entspricht.

Vorteilhaft für die Fehlbewertungsquote und den Bewertungsdurchsatz des menschlichen Experten ist, wenn dieser entscheiden (lassen) kann, wann er welche Problemklassen bewerten möchte. So eignen sich für schwierig zu bewertende Problemklassen insbesondere Phasen hoher Konzentrationsfähigkeit (z.B. morgens), während einfach zu bewertende Problemklassen auch zwischendurch bewertbar sind.

Die mehreren Komplexitätsstufen und die dafür jeweils am besten geeigneten tageszeitlichen Bewertungszeiträume sind vorzugsweise aus bereits bewältigten Entwicklungsprojekten abzuleiten oder alternativ vorzugeben.

Das assistierte Bewerten kann eine Nutzerführung, welche für die Problemklasse der jeweiligen möglichen Problemstelle spezifisch ist, zur Unterstützung eines Nutzers beim Bewerten der jeweiligen möglichen Problemstelle umfassen.

Vorteilhaft für den Bewertungsdurchsatz des menschlichen Experten ist, wenn durch eine Nutzerführung eine geführte Bewertung erfolgt, welche auf die Problemklasse der zu bewertenden möglichen Problemstelle zugeschnitten ist. Dabei wird der menschliche Experte bei der Durchführung seiner Bewertungsaufgabe ähnlich einer Wizard-Funktion durch eine Reihe von für die zugrunde liegende Problemklasse spezifischen Bedienschritten führt.

Vorzugsweise entfallen dabei auch Einarbeitungs- und Schulungsaufwände des menschlichen Experten für herkömmlicherweise verwendete, funktionell überdimensionierte CAD-Anwendungen.

Das assistierte Bewerten kann ein vollautomatisches Bewerten der jeweiligen möglichen Problemstelle anhand einer unter Überwachung durch einen Nutzer gelernten Bewertungsfunktion umfassen, welche für die Problemklasse der jeweiligen möglichen Problemstelle spezifisch ist.

Eine vollautomatische Bewertung kann dementsprechend auch mittels einer auf maschinellem Lernen basierenden, überwacht ("supervised") gelernten Bewertungsfunktion erfolgen. Bevorzugt findet dies unter Vorgabe einer Reihe von Problemklassen mit zugehörigen Bewertungen statt, welche dann anhand von Trainingsdaten gelernt werden. Die Trainingsdaten sind prinzipiell jedem System zur Problemstellenverwaltung entnehmbar.

Vorzugsweise ist die Bewertungsfunktion nach dem Training in der Lage, zu neuen, aber den gelernten Trainingsdaten ähnlichen Merkmalsvektoren korrekte Bewertungen zu liefern. Diese Bewertungen können bei Fehlbewertungsquoten, welche unter jenen menschlicher Bewerter liegen, direkt übernommen werden. Alternativ können Stichprobenkontrollen durch den menschlichen Bewerter vorgenommen werden.

Ein Datenträger mit rechnerlesbaren Anweisungen nach einem Ausführungsbeispiel kann derart ausgestaltet sein, dass diese bei Ausführung durch ein Rechnersystem dieses veranlassen, das Verfahren gemäß einem Ausführungsbeispiel durchzuführen.

Eine Vorrichtung zum Überprüfen der Baubarkeit eines virtuellen Prototyps nach einem Ausführungsbeispiel umfasst eine Problemstellen-Ermittlungseinrichtung, welche dazu eingerichtet ist, den virtuellen Prototyp aus virtuellen Bauteilen zusammenzufügen und mögliche Problemstellen automatisch zu ermitteln, welche beim Zusammenfügen auftreten können und vorgegebenen konstruktiven, physikalischen und/oder ästhetischen Anforderungen nicht genügen. Die Vorrichtung ist gekennzeichnet durch eine Bewertungseinrichtung, welche dazu eingerichtet ist, ein Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle zu assistieren.

Die Bewertungseinrichtung kann durch ein Rechnersystem gebildet sein.

Insbesondere ist ein nach der Von-Neumann-Architektur, der Harvard-Architektur oder einer Mischform dieser Architekturen gestaltetes Rechnersystem als Bewertungseinrichtung einsetzbar.

Die Problemstellen-Ermittlungseinrichtung kann zugleich die Bewertungseinrichtung sein.

Ein Zusammenlegen von Problemstellen-Ermittlungseinrichtung und Bewertungseinrichtung kann insbesondere dann vorteilhaft sein, wenn nicht bereits eine separate Problemstellen-Ermittlungseinrichtung für das Zusammenzufügen des virtuellen Prototyps aus virtuellen Bauteilen und das automatische Ermitteln der möglichen Problemstellen zum Einsatz kommt. Dadurch ist es möglich, die vorzuhaltende IT-Infrastruktur zu vereinfachen.

Die Bewertungseinrichtung kann zur Durchführung des Verfahrens gemäß einem Ausführungsbeispiel ausgestaltet sein.

Demzufolge sind die oben genannten Verfahrensmerkmale in der Vorrichtung analog nutzbar.

Verfahren und Vorrichtungen nach Ausführungsbeispielen können insbesondere den Schritt des Bewertens möglicher Problemstellen, welche beim Zusammenfügen des virtuellen Prototyps aus virtuellen Bauteilen auftreten können, effizienter, schneller und fehlerfreier gestalten.

Verschiedene Wirkungen können mit Verfahren und Vorrichtungen nach Ausführungsbeispielen erzielt werden. Insbesondere können der Anteil der durch menschliche Experten vorzunehmenden Bewertungen, der Arbeits- und Zeitaufwand für das Bewerten sowie die Fehlbewertungsquote reduziert werden.

Verfahren und Vorrichtungen nach Ausführungsbeispielen erlauben somit eine weitergehende Automatisierung der virtuellen Produktentwicklung.

### KURZE BESCHREIBUNG DER FIGUREN

Die Erfindung wird nachfolgend unter Bezugnahme auf die Zeichnungen anhand bevorzugter Ausführungsformen näher erläutert. In den Zeichnungen bezeichnen identische Bezugszeichen identische Elemente.
Figur 1 zeigt ein Flussdiagramm eines Verfahrens nach einem Ausführungsbeispiel.
Figur 2 zeigt ein Flussdiagramm eines zweiten Verfahrensschritts des Verfahrens nach dem Ausführungsbeispiel.
Figur 3 zeigt ein schematisches Blockschaltbild eines Systems mit einer Vorrichtung nach einem Ausführungsbeispiel.
Figur 4 zeigt eine schematische Ansicht eines Schnittvolumens einer beispielhaften möglichen Problemstelle.
Figur 5 zeigt eine schematische Ansicht einer mehrstufigen Bewertungsreihenfolge für mögliche Problemstellen nach einem Ausführungsbeispiel.
Figur 6 zeigt ein Flussdiagramm einer Nutzerführung beim Bewerten einer möglichen Problemstelle nach einem Ausführungsbeispiel.

### DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich werden.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein.

Nachfolgend werden Verfahren und Vorrichtungen zum Überprüfen der Baubarkeit eines virtuellen Prototyps etwa aus der Kraftfahrzeug-, Luftfahrt-, Raumfahrt-, Schiffbau-, allgemeinen Maschinenbau- und/oder Konsumgüterindustrie detailliert beschrieben.

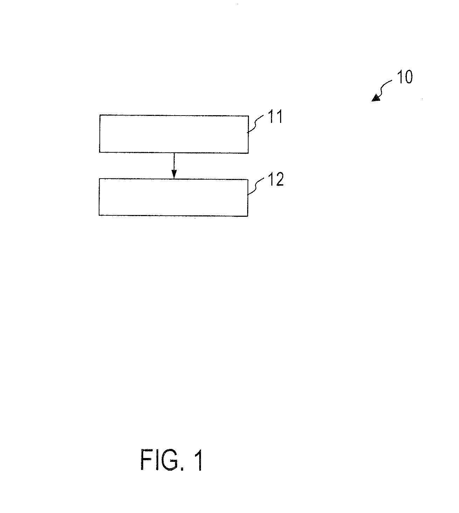

Figur 1 zeigt ein Flussdiagramm eines Verfahrens 10 nach einem Ausführungsbeispiel.

Darin sind die beiden Verfahrensschritte 11 und 12 dargestellt. Dabei werden im ersten Schritt 11 mögliche Problemstellen, welche beim Zusammenfügen des virtuellen Prototyps aus virtuellen Bauteilen auftreten können und vorgegebenen konstruktiven, physikalischen und/oder ästhetischen Anforderungen nicht genügen, automatisch ermittelt. Beispiele für solche Anforderungen sind "Abstand zu gering", "Temperatur zu hoch" oder auch "Materialien X und Y aneinander stoßend".

Der zweite Schritt 12 umfasst ein durch ein Rechnersystem assistiertes Bewerten von mindestens einer der ermittelten möglichen Problemstellen. Das Ziel ist hierbei eine Unterscheidung in kritische oder unkritische Problemstellen. Dies geschieht in Abhängigkeit von mehreren Merkmalen der jeweiligen möglichen Problemstelle, welche, wie bereits weiter oben erwähnt, ebenfalls konstruktiver, physikalischer und/oder ästhetischer Natur sein können.

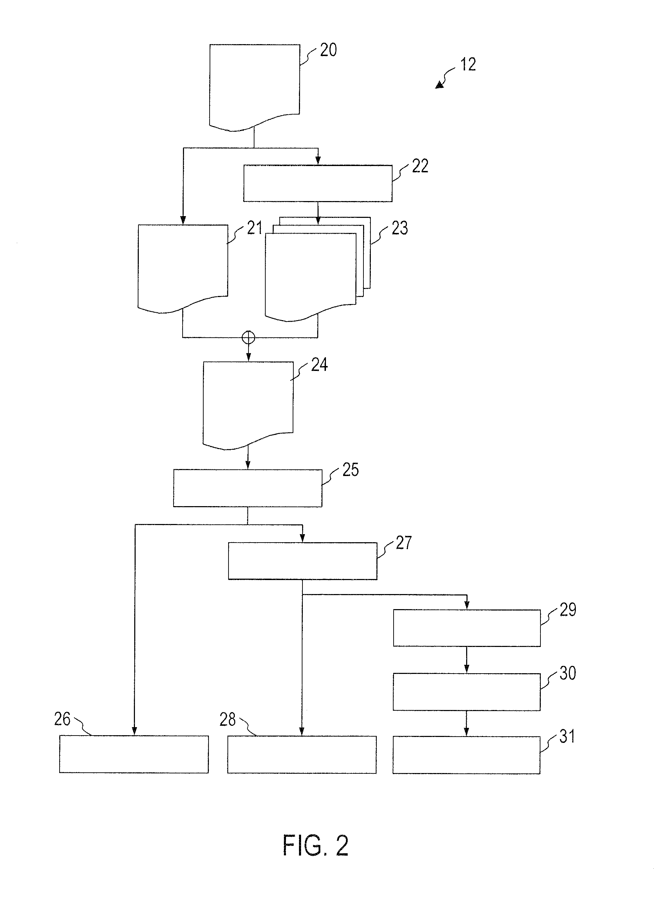

Figur 2 zeigt ein Flussdiagramm des zweiten Verfahrensschritts 12 des Verfahrens 10 nach dem Ausführungsbeispiel.

Ausgangspunkt des weiteren Verfahrensablaufs ist eine der ermittelten möglichen Problemstellen 20.

Für ein durch ein Rechnersystem assistiertes Bewerten ist es zunächst erforderlich, die mögliche Problemstelle 20 mit Merkmalen so zu beschreiben, dass sie von andersartigen möglichen Problemstellen 20 differenzierbar ist.

Einerseits können hierzu Eigenschaften 21 aus den Metadaten der an der jeweiligen möglichen Problemstelle 20 beteiligten Bauteile als Merkmale entnommen werden, wie etwa Materialart, Verwendungshinweise, räumliche Position innerhalb der Produktstruktur oder Schlüsselwörter wie beispielsweise "Schraube".

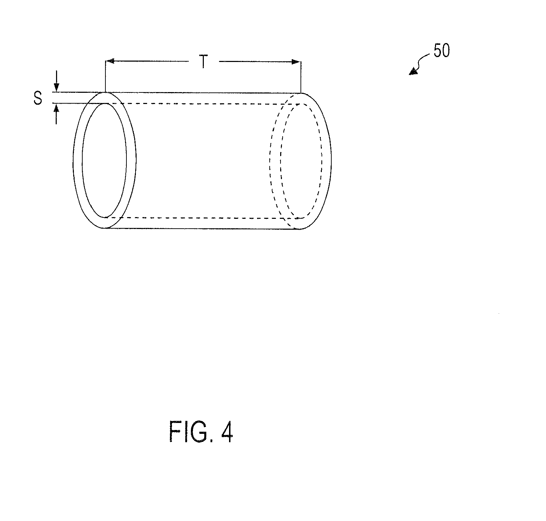

Andererseits weist jede mögliche Problemstelle 20 eine räumlich-geometrische Erstreckung auf, welche auf Basis einer Schnittberechnung 22 als Schnittvolumen und/oder in Form von Schnittebenen darstellbar ist. Ein Beispiel für ein Schnittvolumen an einer möglichen Problemstelle 20, welche durch eine aus einer Schraube und einem Bohrloch bestehenden Bauteilpaarung zustande kommt, ist weiter unten in Fig. 4 dargestellt. Vom Ergebnis der Schnittberechnung 22 sind geometrische Eigenschaften 23 ableitbar, welche ebenso als Merkmale zur Beschreibung der möglichen Problemstelle 20 dienen können. Diese sind z.B. eine punktweise Durchdringungstiefe, ein Verdrängungsvolumen der Kollision, Eigenschaften der Oberfläche, ein Verhältnis von Oberfläche und Volumen, eine räumliche Dichte- und Volumensverteilung der Schnittgeometrie sowie daraus ermittelte Fourierkoeffizienten, Hauptachsen und Verhältnisse der Ausdehnung, Rückzugsvektoren (d.h. Verschiebungen der beteiligten virtuellen Bauteile, welche eine ermittelte Bauteilüberschneidung beseitigen) sowie Eigenschaften der Schnittlinie.

Diese Menge oder eine Teilmenge der ermittelten Merkmale der möglichen Problemstelle 20 bildet einen Merkmalsvektor 24, welcher im weiteren Ablauf die Unterscheidbarkeit der möglichen Problemstellen 20 sicherstellt.

Mittels einer geeigneten Metrik, welche zur Gewichtung der einzelnen Merkmale eines Merkmalvektors 24 dient, werden die jeweiligen Merkmalsvektoren 24 von zueinander ähnlichen oder gleichen möglichen Problemstellen 20 auch in räumlicher Nähe zueinander in einem mehrdimensionalen metrischen Merkmalsraum abgebildet. Jeder Unterraum des Merkmalsraums, welcher eine solche Ballung von Merkmalsvektoren 24 umfasst, kann eine Problemklasse von zueinander ähnlichen oder gleichen möglichen Problemstellen 20 darstellen, welche insbesondere ähnlich oder gleich zu bewerten sind.

Ein durch ein Rechnersystem assistiertes Bewerten einer möglichen Problemstelle basiert daher auf einem Klassifizieren 25 der möglichen Problemstelle 20 in eine von mehreren derartiger Problemklassen.

Einzelne Problemklassen können dabei vorgegeben sein. Beispielsweise ist für die häufig auftretende mögliche Problemstelle 20 der Bauteilpaarung aus Schraube und Bohrloch die Vorgabe einer eigenen Problemklasse denkbar. Das Klassifizieren 25 der möglichen Problemstelle 20 in die für die Bauteilpaarung aus Schraube und Bohrloch vorgegebene Problemklasse kann beispielsweise durch eine heuristische Bewertungsfunktion erfolgen, welche darauf abstellt, dass in den Metadaten eines der beiden virtuellen Bauteile das Schlüsselwort "Schraube" enthalten ist, und dass ein Zuversichtsmaß für die geometrische Übereinstimmung zwischen der Modellvorstellung eines "Rohrstücks" (siehe Figurenbeschreibung zur Fig. 4) und dem ermittelten Schnittvolumen eine vorgegebene Schwelle übersteigt. Prinzipiell sind dabei Falschklassifikationen erlaubt, diese sollten allerdings seltener als bei einem menschlichen Bewerter vorkommen.

Einzelne Problemklassen können auch vollautomatisch ermittelt werden. Diese entsprechen den weiter oben erwähnten Ballungen von Merkmalsvektoren 24 im mehrdimensionalen Merkmalsraum, welche etwa ohne Überwachung durch einen Nutzer erlernbar sind (engl. unsupervised learning), beispielsweise mit dem sogenannten Expectation-Maximization-Algorithmus (EM-Algorithmus).

In Abhängigkeit von der Klassifizierung 25 können einzelne der mehreren Problemklassen bereits einem vollautomatischen Bewerten 26 zugänglich sein, welches anhand einer durch einen Nutzer gelernten Bewertungsfunktion erfolgt (engl. supervised learning).

Das vollautomatische Bewerten 26 assoziiert unbekannte Eingabeparameter (hier die Elemente des Merkmalsvektors 24) mit dem jeweils richtigen Ausgabeparameter (Bewertung als "kritisch" oder "unkritisch"), sofern in einer vorgelagerten, überwachten Trainingsphase unter Vorgabe von Lerndaten eine solche Assoziation (Bewetungsfunktion) gelernt wurde. Als Lerndaten dienen insbesondere in der Vergangenheit getätigte Bewertungen von möglichen Problemstellen 20. Die Bewertungsfunktion lässt sich z.B. mit einem künstlichen neuronalen Netz realisieren. Das vollautomatische Bewerten 26 kann damit nicht nur zuvor explizit trainierte Paarungen aus Eingabe- und Ausgabeparametern beurteilen, sondern insbesondere auch unbekannte Paarungen (Lerntransfer).

Ist ein vollautomatisches Bewerten 26 für die Problemklasse der möglichen Problemstelle 20 noch nicht möglich, so erfolgt nach Möglichkeit ein Verknüpfen 27 der mögliche Problemstelle 20 mit einer in der Vergangenheit bewerteten Problemstelle der gleichen Problemklasse. Das Verknüpfen 27 kann dabei implizit auch bereits durch die Klassifikation 25 erfolgen. Es findet also ein Rückgriff auf bekannte Bewertungen statt, welcher nicht durch Lernen sondern durch ein Zuordnen auf Grundlage der Problemklasse der vorliegenden möglichen Problemstelle 20 erfolgt. Wurde eine ähnliche oder gleiche Problemstelle bereits in der Vergangenheit identisch klassifiziert und einer Bewertung unterzogen, so ist diese Bewertung dann auch für die vorliegende mögliche Problemstelle 20 nutzbar.

Somit kann das Verknüpfen 27 weitere der mehreren Problemklassen einem vollautomatischen Bewerten 28 zugänglich machen, welches die Bewertung der in der Vergangenheit bewerteten Problemstelle nutzt. Schlägt das Verknüpfen 27 der möglichen Problemstelle 20 jedoch fehl, so muss ein menschlicher Bewerter das Bewerten übernehmen.

Dem vorgelagert erfolgt zunächst ein Bereitstellen 29 weiterer konstruktiver, physikalischer und/oder ästhetischer Informationen, welche für die Problemklasse der jeweiligen möglichen Problemstelle 20 spezifisch sind. Insbesondere sind dies automatisch aus einer für die zugrundeliegende Problemklasse relevanten Perspektive aufgenommene räumliche Ansichten und/oder Schnittebenen.

Die zusätzlichen Informationen können die Entscheidungsgrundlagen aussagekräftiger machen und dem menschlichen Nutzer zeitraubende Wechsel zwischen verschiedenen Entwicklungstools und/oder Zeichnungsansichten ersparen.

Bevorzugt wird die mögliche Problemstelle 20 dem menschlichen Nutzer nicht wahllos, sondern zusammen mit gleichartigen möglichen Problemstellen 20 vorgelegt. Hierzu kann ein Sortieren 30 der möglichen Problemstellen 20 in eine Bewertungsreihenfolge und/oder zu verfügbaren Bewertungszeiträumen stattfinden.

Das Sortieren 30 kann mehrere Sortierkriterien umfassen, darunter eine Prioritätsstufe, die Problemklasse und/oder eine Komplexitätsstufe der jeweiligen möglichen Problemstelle 20.

Das Sortierkriterium der Prioritätsstufe ermöglicht ein Priorisieren des Bewertens bestimmter Problemklassen zulasten anderer. Insbesondere für den Entwicklungsprozess dringliche Bewertungen lassen sich so vorziehen.

Alternativ oder zusätzlich ist die Problemklasse als Sortierkriterium einsetzbar. Dies stellt sicher, dass sich nicht mit jeder neu vorgelegten möglichen Problemstelle 20 der Bewertungskontext ändert, sondern gleichartige mögliche Problemstellen 20 aufeinander folgend zur Bewertung vorgelegt werden.

Als weiteres Sortierkriterium steht die Komplexitätsstufe der möglichen Problemstelle 20 zur Verfügung. Damit findet jedoch kein lineares Sortieren, sondern ein Zuordnen 30 der möglichen Problemstellen 20 zu verfügbaren Bewertungszeiträumen statt. Komplexere mögliche Problemstellen 20 lassen sich so in Zeiträumen bewerten, in welchen menschliche Bewerter am leistungsfähigsten sind.

Schließlich erfolgt mittels eines Bewertungswerkzeugs, welches eine für die Problemklasse der möglichen Problemstelle 20 spezialisierte Nutzerführung realisiert, das Bewerten 31 der möglichen Problemstelle 20 durch den menschlichen Bewerter. Dabei können zueinander ähnliche oder gleiche mögliche Problemstellen 20 gemeinsam bewertet werden. Beispielsweise spricht nichts dagegen, eine Vielzahl von Schrauben-Bohrloch-Bauteilpaarungen, welche in eine dafür vorgesehene Problemklasse klassifiziert wurden, gemeinsam als "unkritisch" einzustufen.

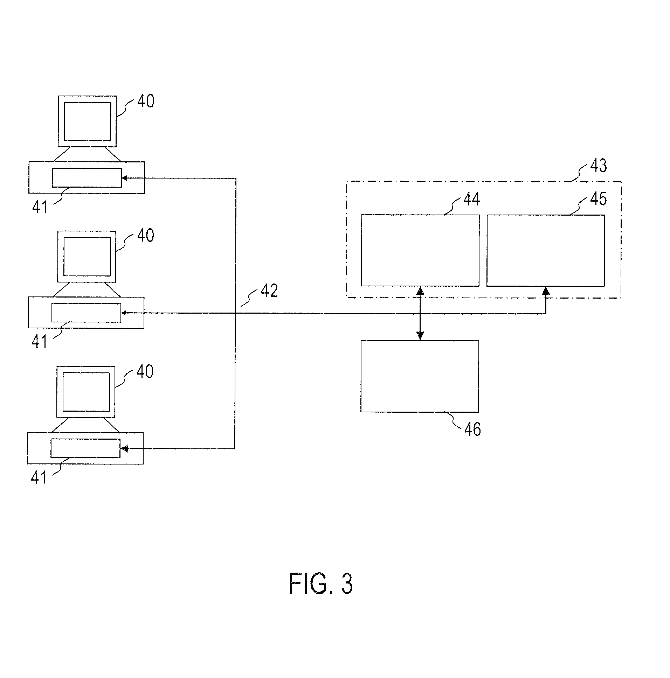

Figur 3 zeigt ein schematisches Blockschaltbild eines Systems mit einer Vorrichtung 43 zum Überprüfen der Baubarkeit eines virtuellen Prototyps nach einem Ausführungsbeispiel.

Bei dem in Fig. 3 gezeigten System werden die einzelnen Bauteile eines Produkts, beispielsweise eines Fahrzeugs, an verschiedenen Arbeitsplätzen rechnergestützt konstruiert. Die dargestellten Arbeitsplatzrechner 40 sind dabei CAD-Systeme, welche digitale 3D-Konstruktionsdaten des jeweiligen Bauteils erzeugen und diese in Speichern 41 ablegen, welche in der Regel handelsübliche Massenspeicher (Festplatten) sind. Diese sind dezentral am jeweiligen Arbeitsplatz 40 und/oder zentral, beispielsweise in Rechenzentren, vorgesehen.

Die Arbeitsplatzrechner 40 und Speicher 41 können prinzipiell weltweit verteilt und mittels entsprechender Kommunikationsschnittstellen einem Datenaustausch zugänglich sein. Dabei verbindet ein Kommunikationsnetz 42 die Speicher 41 mit einer zentralen Vorrichtung 43 zum Überprüfen der Baubarkeit eines virtuellen Prototyps nach einem Ausführungsbeispiel, welche ebenfalls über entsprechende Kommunikationsschnittstellen in das Kommunikationsnetz 42 eingebunden ist. Das Kommunikationsnetz 42 ist kabelgebunden und/oder kabellos ausgestaltet. Insbesondere ist in diesem Zusammenhang auch ein Datenaustausch über das Internet oder eine Funkübertragung, beispielsweise über ein Mobilfunknetz, denkbar.

Die Vorrichtung 43 weist zu den Merkmalen des Verfahrens 10 analoge Vorrichtungsmerkmale auf. Diese umfassen, wie in Fig. 3 dargestellt, zumindest eine Problemstellen-Ermittlungseinrichtung 44 sowie eine Bewertungseinrichtung 45.

Die Problemstellen-Ermittlungseinrichtung 44 ist dazu eingerichtet, die vorgehaltenen digitalen 3D-Konstruktionsdaten der einzelnen Bauteile zu einer digitalen Abbildung des Gesamtprodukts, dem sogenannten virtuellen Prototypen, zusammenzufügen und diesen in einer dafür vorgesehenen zentralen Speichereinrichtung 46 abzulegen. Die Einrichtung 44 kann hierzu auf die in den Speichern 41 vorgehaltenen digitalen 3D-Konstruktionsdaten der jeweiligen Bauteile zugreifen.

An den jeweiligen Arbeitsplatzrechnern 40 wird für jedes Bauteil vorzugsweise dasjenige CAD-System verwendet, welches am besten für die Konstruktion dieses Bauteils geeignet ist. Demzufolge liegen von den einzelnen Bauteilen digitale 3D-Konstruktionsdaten vor, welche unterschiedliche Datenformate aufweisen können und zumeist ein sehr großes Datenvolumen umfassen. Die Problemstellen-Ermittlungseinrichtung 44 kann diese das jeweilige Bauteil exakt beschreibenden digitalen 3D-Konstruktionsdaten in ein neutrales, angenähertes Datenformat, das sogenannte Voxelformat, umsetzen, welches auf das Wesentliche reduziert ist. Die CAD-Modelle der Bauteile des zu entwickelnden Produkts werden beispielsweise in entsprechende Voxel-Modelle, Triangulierungen oder dergleichen umgesetzt, was gleichzeitig das anfallende Datenvolumen stark reduziert. Damit wird beispielsweise eine Visualisierung kompletter Produkte, wie etwa Fahrzeuge, machbar.

Ferner ist die Problemstellen-Ermittlungseinrichtung 44 dazu eingerichtet, beim Zusammenfügen von Bauteilpaarungen des virtuellen Prototypen auftretende mögliche Problemstellen automatisch zu ermitteln, welche vorgegebenen konstruktiven, physikalischen und/oder ästhetischen Anforderungen nicht genügen.

Die Aufgabe der Bewertungseinrichtung 45 ist es hingegen, beim Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle zu assistieren.

Bezüglich der Vorrichtung 43 sind vielfältige Modifikationen denkbar. Beispielsweise kann die Bewertungseinrichtung 45 durch ein Rechnersystem gebildet sein. Ferner kann die Problemstellen-Ermittlungseinrichtung 44 zugleich die Bewertungseinrichtung 45 sein. Die Bewertungseinrichtung 45 kann insbesondere zur Durchführung des Verfahrens 10 gemäß dem Ausführungsbeispiel ausgestaltet sein.

Figur 4 zeigt eine schematische Ansicht eines Schnittvolumens 50 einer beispielhaften möglichen Problemstelle 20.

In dem gezeigten Beispiel handelt es sich um das Schnittvolumen 50 einer Bauteilpaarung aus Schraube und Bohrloch. Das Schraubengewinde ist typischerweise nicht auskonstruiert, sondern von außen durch einen Zylinder angenähert, dessen Radius größer ist als jener des zugehörigen Bohrlochs. Das im Schritt der Schnittberechnung 22 (vgl. Fig. 2) ermittelte Schnittvolumen 50 der Bauteilpaarung bildet daher die Form eines an beiden Enden offenen, durch zwei Zylinder und zwei Ebenen begrenzten Rohrstücks. Die Differenz S der Zylinderradien entspricht dabei der Gewindestärke, und der Abstand T der beiden Begrenzungsebenen der Eindringtiefe der Schraube. Dieses einfach zu beschreibende räumlich-geometrische Modell des Schnittvolumens einer solchen Bauteilpaarung kann mit der räumlich-geometrischen Erstreckung einer möglichen Problemstelle 20 verglichen werden, um diese als zur Problemklasse "Schraube-Bohrloch" zugehörig zu klassifizieren.

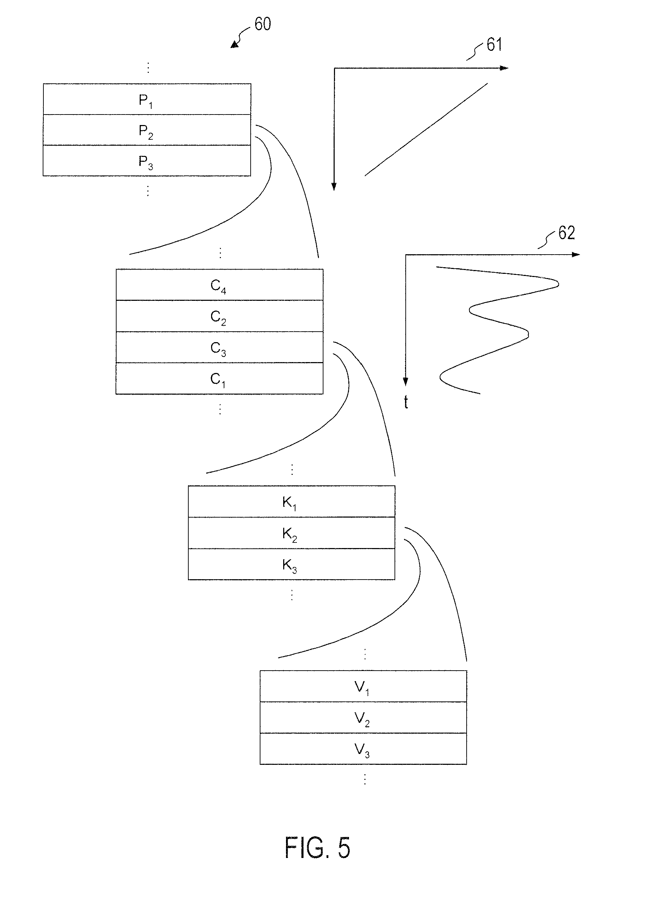

Figur 5 zeigt eine schematische Ansicht einer mehrstufigen Bewertungsreihenfolge 60 für mögliche Problemstellen 20 nach einem Ausführungsbeispiel. Dabei sind der Übersichtlichkeit halber lediglich die Sortierkriterien der möglichen Problemstellen 20 dargestellt.

Im Beispiel der Fig. 5 sind von oben nach unten die vier kaskadierten Sortierkriterien der Prioritätsstufe Pᵢ, der Komplexitätsstufe Cᵢ, der Problemklasse Kᵢ und des Werts Vᵢ eines Merkmals der möglichen Problemstellen 20 abgebildet.

Die Prioritätsstufe Pᵢ kann eine priorisierte Bewertung der möglichen Problemstellen 20 herbeiführen. Diese lineare Art der Sortierung ist in dem schematischen Diagramm 61, welches nach rechts die Prioritätsstufe Pᵢ und nach unten die Bewertungsreihenfolge widerspiegelt, angedeutet.

Ferner zeigt Fig. 5 innerhalb einer Prioritätsstufe Pᵢ eine anhand der jeweiligen Komplexitätsstufe Cᵢ erfolgende Zuordnung der jeweiligen möglichen Problemstelle 20 zu verschiedenen tageszeitlichen Bewertungszeiträumen, in welchen die Leistungsfähigkeit der menschlichen Bewerter unterschiedlich hoch ist. Das schematische Diagramm 62 zeigt nach rechts eine Leistungsfähigkeit durchschnittlicher menschlicher Bewerter über einer nach unten angetragenen Tageszeit t. Eine optimale Zuordnung von möglichen Problemstellen 20 zu tageszeitlichen Bewertungszeiträumen ist als typische Optimierungsaufgabe entsprechenden Lösungsansätzen zugänglich.

Fig. 5 zeigt des Weiteren innerhalb einer Gruppe von möglichen Problemstellen 20 mit gleicher Komplexitätsstufe Cᵢ eine Sortierung gemäß der Problemklasse Kᵢ der möglichen Problemstellen 20, sowie innerhalb einer Gruppe von möglichen Problemstellen 20 mit gleicher Problemklasse Kᵢ eine Sortierung nach den Werten Vᵢ eines beliebigen Merkmals der möglichen Problemstellen 20.

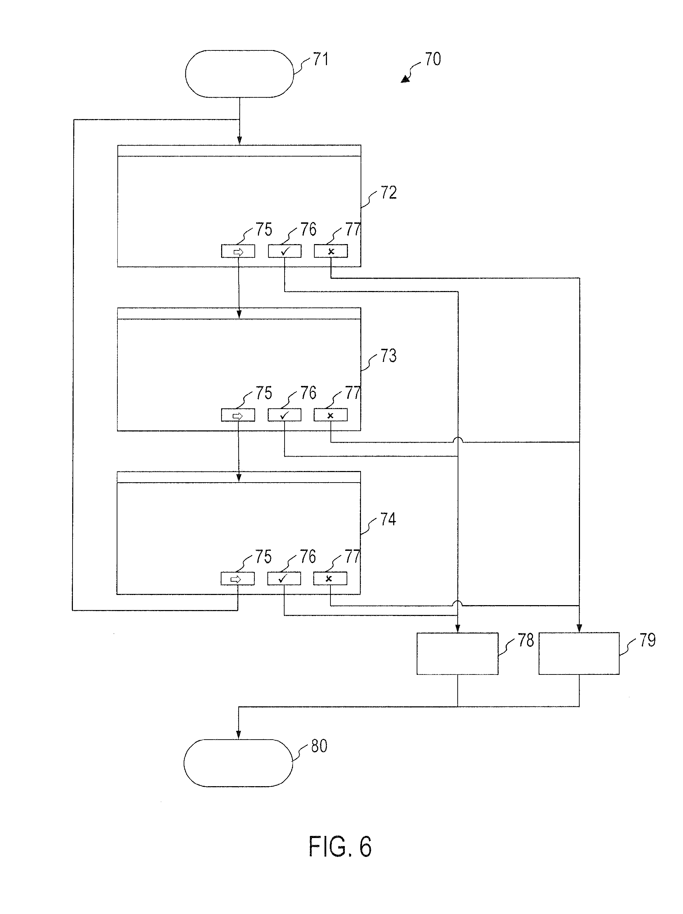

Figur 6 zeigt ein Flussdiagramm einer Nutzerführung 70 beim Bewerten einer möglichen Problemstelle 20 nach einem Ausführungsbeispiel.

Dabei wird am Startpunkt 71 beginnend eine Folge von Nutzerdialogen 72, 73, 74 durchlaufen, welche jeweils über Bedienelemente 75, 76, 77 verfügen. Durch Betätigen des Bedienelements 75 erfolgt eine Verzweigung in den jeweils folgenden Nutzerdialog 73, 74, 72. Der menschliche Bewerter kann beliebig oft zwischen diesen Nutzerdialogen 72, 73, 74 wechseln, um beispielsweise verschiedene Ansichten oder Informationen zu einer möglichen Problemstelle 20 in Augenschein zu nehmen.

Aus den Nutzerdialogen 72, 73, 74 heraus kann jeweils durch Betätigen des Bedienelements 76 ein Bewerten 78 als unkritische Problemstelle oder durch Betätigen des Bedienelements 77 ein Bewerten 79 als kritische Problemstelle stattfinden. In beiden Fällen ist damit der Endpunkt 80 der Nutzerführung 70 für das Bewerten der möglichen Problemstelle 20 erreicht.

Während Ausführungsbeispiele unter Bezugnahme auf die Figuren detailliert beschrieben wurden, können bei weiteren Ausführungsbeispielen alternative oder zusätzliche Merkmale verwendet werden.

Verfahren und Vorrichtungen nach Ausführungsbeispielen wurden mit Bezug zur Entwicklung einzelner Produkte beschrieben, sind jedoch auch bei der Entwicklung ganzer Produktlinien und/oder -plattformen einsetzbar.

Verschiedene Wirkungen können mit Vorrichtungen und Verfahren nach Ausführungsbeispielen erzielt werden. Insbesondere betrifft dies ein Reduzieren des Anteils der durch menschliche Experten vorzunehmenden Bewertungen, des Arbeits- und Zeitaufwands für das Bewerten sowie der Fehlbewertungsquote.

### BEZUGSZEICHEN

- 10: Verfahren
- 11-12: Verfahrensschritte
- 20: Mögliche Problemstelle
- 21: Eigenschaften aus Metadaten
- 22: Schnittberechnung
- 23: Geometrische Eigenschaften
- 24: Merkmalsvektor
- 25: Klassifizieren
- 26: Vollautomatisches Bewerten anhand gelernter Bewertungsfunktion
- 27: Vollautomatisches Verknüpfen
- 28: Vollautomatisches Bewerten anhand Verknüpfung
- 29: Bereitstellen weiterer Informationen
- 30: Sortieren in eine Bewertungsreihenfolge, Zuordnen zu Bewertungszeiträumen
- 31: Nutzergeführtes Bewerten
- 40: Arbeitsplatzrechner
- 41, 46: Speicher
- 42: Kommunikationsnetzwerk
- 43: Vorrichtung
- 44: Problemstellen-Ermittlungseinrichtung
- 45: Bewertungseinrichtung
- 50: Schnittvolumen
- 61, 62: Diagramme
- 70: Nutzerführung
- 71: Startpunkt
- 72, 73, 74: Nutzerdialoge
- 75, 76, 77: Bedienelemente
- 78: Bewerten als unkritische Problemstelle
- 79: Bewerten als kritische Problemstelle
- 80: Endpunkt
- S: Gewindestärke
- T: Eindringtiefe
- Pᵢ: Prioritätsmaße
- Cᵢ: Komplexitätsmaße
- Kᵢ: Problemklassen
- Vᵢ: Merkmalswerte
- t: Tageszeit

## Patentansprüche

1. Verfahren zum Überprüfen der Baubarkeit eines virtuellen Prototyps, umfassend:
automatisches Ermitteln von möglichen Problemstellen, welche beim Zusammenfügen des virtuellen Prototyps aus virtuellen Bauteilen auftreten können und vorgegebenen konstruktiven, physikalischen und/oder ästhetischen Anforderungen nicht genügen, **gekennzeichnet durch**:
**durch** ein Rechnersystem assistiertes Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle.

2. Verfahren gemäß Anspruch 1, **dadurch gekennzeichnet, dass** die mehreren Merkmale ein Schnittvolumen der jeweiligen möglichen Problemstelle, mit dem sich einige der virtuellen Bauteile in dem virtuellen Prototyp überschneiden, umfassen.

3. Verfahren gemäß Anspruch 1 oder 2, **dadurch gekennzeichnet, dass** das assistierte Bewerten ein gemeinsames Bewerten von möglichen Problemstellen umfasst, welche gleiche mehrere Merkmale aufweisen.

4. Verfahren gemäß einem der Ansprüche 1 bis 3, **dadurch gekennzeichnet, dass** das assistierte Bewerten ein Klassifizieren der jeweiligen möglichen Problemstelle anhand der mehreren Merkmale der möglichen Problemstelle in eine von mehreren Problemklassen umfasst.

5. Verfahren gemäß Anspruch 4, **dadurch gekennzeichnet, dass** zumindest eine der mehreren Problemklassen für den Verfahrensablauf vorgegeben ist.

6. Verfahren gemäß Anspruch 5, **dadurch gekennzeichnet, dass** das Klassifizieren der jeweiligen möglichen Problemstelle in die vorgegebene Problemklasse ein vollautomatisches Klassifizieren anhand einer heuristischen Bewertungsfunktion umfasst, welche für die vorgegebene Problemklasse spezifisch ist.

7. Verfahren gemäß einem der Ansprüche 4 bis 6, **dadurch gekennzeichnet, dass** zumindest eine der mehreren Problemklassen während des Verfahrensablaufs vollautomatisch ermittelt wird.

8. Verfahren gemäß einem der Ansprüche 4 bis 7, **dadurch gekennzeichnet, dass** das assistierte Bewerten ein vollautomatisches Verknüpfen der jeweiligen möglichen Problemstelle anhand eines Verweises auf eine bereits bewertete Problemstelle umfasst, welche die gleichen mehreren Merkmale und/oder die gleiche Problemklasse aufweist.

9. Verfahren gemäß einem der Ansprüche 4 bis 8, **dadurch gekennzeichnet, dass** das assistierte Bewerten ein Bereitstellen weiterer konstruktiver, physikalischer und/oder ästhetischer Informationen umfasst, welche für die Problemklasse der jeweiligen möglichen Problemstelle spezifisch und von den mehreren Merkmalen der möglichen Problemstelle abgeleitet sind.

10. Verfahren gemäß Anspruch 9, **dadurch gekennzeichnet, dass** die weiteren Informationen mindestens eine räumliche Ansicht und/oder mindestens eine Schnittebene der jeweiligen möglichen Problemstelle umfassen.

11. Verfahren gemäß einem der Ansprüche 4 bis 10, **dadurch gekennzeichnet, dass** das assistierte Bewerten ein Sortieren der möglichen Problemstellen in eine Bewertungsreihenfolge anhand der Problemklasse der jeweiligen möglichen Problemstelle umfasst.

12. Verfahren gemäß einem der Ansprüche 4 bis 11, **dadurch gekennzeichnet, dass** das assistierte Bewerten ein Sortieren der möglichen Problemstellen in eine Bewertungsreihenfolge anhand einer von mehreren Prioritätsstufen umfasst, welche für die Problemklasse der jeweiligen möglichen Problemstelle spezifisch ist, wobei jede der mehreren Prioritätsstufen einer unterschiedlich kritischen Problemstelle entspricht.

13. Verfahren gemäß einem der Ansprüche 4 bis 12, **dadurch gekennzeichnet, dass** das assistierte Bewerten ein Zuordnen der möglichen Problemstellen zu verfügbaren Bewertungszeiträumen anhand einer von mehreren Komplexitätsstufen umfasst, welche für die Problemklasse der jeweiligen möglichen Problemstelle spezifisch ist, wobei jede der mehreren Komplexitätsstufen einem unterschiedlichen Komplexitätsgrad beim Bewerten der jeweiligen möglichen Problemstelle entspricht.

14. Verfahren gemäß einem der Ansprüche 4 bis 13, **dadurch gekennzeichnet, dass** das assistierte Bewerten eine Nutzerführung, welche für die Problemklasse der jeweiligen möglichen Problemstelle spezifisch ist, zur Unterstützung eines Nutzers beim Bewerten der jeweiligen möglichen Problemstelle umfasst.

15. Verfahren gemäß einem der Ansprüche 4 bis 14, **dadurch gekennzeichnet, dass** das assistierte Bewerten ein vollautomatisches Bewerten der jeweiligen möglichen Problemstelle anhand einer unter Überwachung durch einen Nutzer gelernten Bewertungsfunktion umfasst, welche für die Problemklasse der jeweiligen möglichen Problemstelle spezifisch ist.

16. Datenträger mit rechnerlesbaren Anweisungen, welche derart ausgestaltet sind, dass sie bei Ausführung durch ein Rechnersystem dieses veranlassen, das Verfahren gemäß einem der Ansprüche 1 bis 15 durchzuführen.

17. Vorrichtung (43) zum Überprüfen der Baubarkeit eines virtuellen Prototyps, umfassend:
eine Problemstellen-Ermittlungseinrichtung (44), welche dazu eingerichtet ist, den virtuellen Prototyp aus virtuellen Bauteilen zusammenzufügen und mögliche Problemstellen automatisch zu ermitteln, welche beim Zusammenfügen auftreten können und vorgegebenen konstruktiven, physikalischen und/oder ästhetischen Anforderungen nicht genügen,
**gekennzeichnet durch**:
eine Bewertungseinrichtung (45), welche dazu eingerichtet ist, ein Bewerten mindestens einer der möglichen Problemstellen als eine kritische oder unkritische Problemstelle in Abhängigkeit von mehreren konstruktiven, physikalischen und/oder ästhetischen Merkmalen der jeweiligen möglichen Problemstelle zu assistieren.

18. Vorrichtung (43) gemäß Anspruch 17, **dadurch gekennzeichnet, dass** die Bewertungseinrichtung (45) durch ein Rechnersystem gebildet ist.

19. Vorrichtung (43) gemäß Anspruch 17 oder 18, **dadurch gekennzeichnet, dass** die Problemstellen-Ermittlungseinrichtung (44) zugleich die Bewertungseinrichtung (45) ist.

20. Vorrichtung (43) gemäß einem der Ansprüche 17 - 19, **dadurch gekennzeichnet, dass** die Bewertungseinrichtung (45) zur Durchführung des Verfahrens gemäß einem der Ansprüche 1 - 15 ausgestaltet ist.
